# EUROPEAN PATENT SPECIFICATION

(11) **EP 1 564 034 B1**
(45) Date of publication and mention of the grant of the patent: **28.03.2007**
(21) Application number: 05100980.1
(22) Date of filing: 11.02.2005
(51) Int. Cl.: B60G 11/113, B60G 7/00

(54) **Apparatus and method for mounting a leaf spring to an axle housing**
Vorrichtung und Verfahren zur Befestigung einer Blattfeder an einem Achsgehäuse
Dispositif et méthode pour attacher un ressort à lame à un carter d'essieu

(30) Priority: 12.02.2004 US 777964
(43) Date of publication of application: 17.08.2005
(73) Proprietor: DEERE & COMPANY, Moline, Illinois 61265-8098 (US)
(72) Inventor: Hitt, Brian James, 55025 MN, Forest Lake (US); Bedis, Michael, 53066 WI, Oconomowoc (US); Page, Rocky Hudson, 29745 SC, York (US)
(74) Representative: Magin, Ludwig Bernhard

(56) References cited:
- EP-A- 0 590 528
- EP-A- 0 625 440
- US-A- 3 773 347
- US-A- 5 971 654
- PATENT ABSTRACTS OF JAPAN vol. 2000, no. 01, 31 January 2000 (2000-01-31) -& JP 11 291731 A (SUZUKI MOTOR CORP), 26 October 1999 (1999-10-26)

## Description

The present invention relates generally to an apparatus comprising an axle housing having a generally tubular outer surface and an axis, a leaf spring positionable perpendicular to the axis of the axle housing, a pair of U-bolts, each U-bolt having an intermediate portion forming an arc around the axle housing, and having first and second ends operably connected to the leaf spring and to a method comprising casting a pair of tabs into an axle housing, the axle housing having an axis, each of the pair of tabs extending perpendicular from the axis, positioning an intermediate portion of a U-bolt between the pair of tabs.

Utility vehicles such as Gator™ utility vehicles available from Deere and Company of Moline, Illinois, may use leaf spring suspension of the vehicle over an axle. Opposing ends of a leaf spring may be pivotally connected to the vehicle frame, and the intermediate section of the leaf spring may be attached to a tubular axle housing with a pair of U-bolts.

Proper assembly of U-bolts to the tubular axle housing is critical to achieve long durability and proper function of the leaf spring suspension. Each U-bolt must be torqued correctly and must be assembled so that the U-bolt is perpendicular to the axis of the axle. If the U-bolts are allowed to deviate from perpendicular alignment with respect to the axle axis, the U-bolt may become loose, which may adversely and severely detract from the performance and durability of the leaf spring suspension.

EP-A-590528 discloses an apparatus according to the preamble of claim 1.

US-A-5971654 shows a device for mounting a leaf spring to an axle housing of a vehicle, in which a cap device receives the axle housing of the vehicle. A liner is positioned inside the cap to permit rotational movement of the axle housing. A pair of U-bolts is mounted on the cap and extends down from the cap toward the leaf spring. First and second plates engage the U-bolts to present a pair of parallel plates positionable on top and bottom of the leaf spring, respectively.

In operation of a vehicle, the U-bolt may move from side-to-side along the axis of the axle housing, and may jeopardize the integrity of the connection between the axle housing and leaf spring.

It is therefore an object of the current invention to provide an apparatus and method preventing movement of the U-bolt with respect to the axis. It also is desirable to provide a guide for positioning the U-bolts during the assembly process of a leaf spring to an axle housing.

This object is met according to the invention by the teaching of claim 1 or 7, while features developing the solution in an advantageous way are set forth in the further claims.

A tubular axle housing is provided with pairs of tabs that extend from the housing perpendicular to the axis of the axle. The tabs are dimensioned and shaped to trap the intermediate portion or section of a U-bolt that holds a leaf spring to the axle housing. The tabs block or prevent lateral movement of the U-bolt with respect to the axle housing.

Each tab may protrude or extend from the axle to a height or length sufficient to prevent the intermediate section of the U-bolt from sliding over the tab. The tabs retain each U-bolt so that it stays perpendicular to the axle housing during assembly and in service. Each tab may have any shape that will adequately restrain U-bolt movement along the axle housing. The sides of each tab may be sloped in a manner to help locate and guide a U-bolt between the tabs during the assembly process.

An embodiment of the invention described in more detail below is shown in the drawings, in which:
FIG. 1 is a perspective view of a pair of U-bolts connecting an axle housing to a leaf spring in a first embodiment of the invention.
FIG. 2 is a side view of a pair of U-bolts connecting an axle housing to a leaf spring according to the first embodiment.

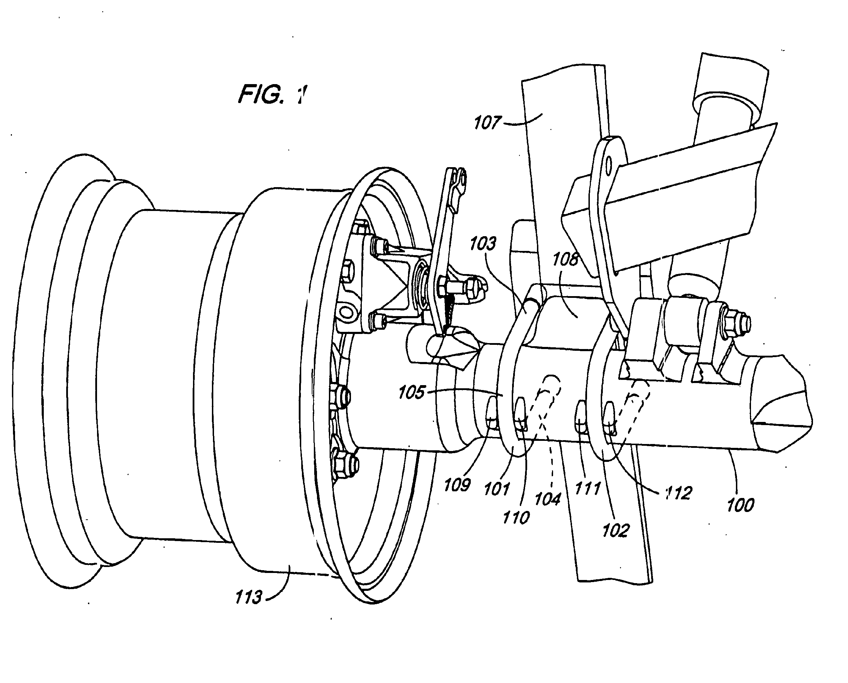

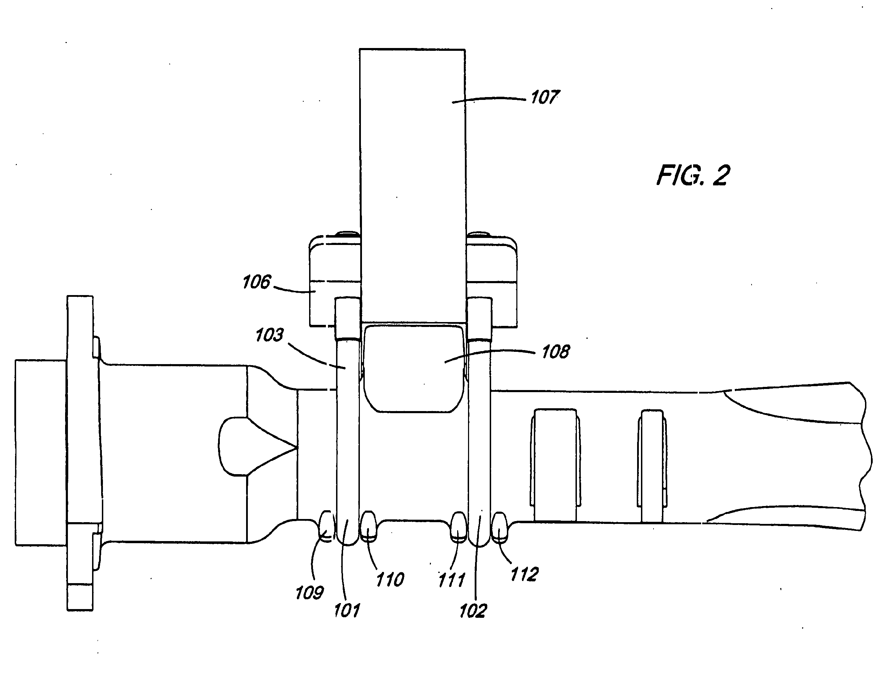

As shown in FIGS. 1 and 2, U-bolts 101, 102 are positioned to extend around axle housing 100 of a utility vehicle. The axle housing 100 may have a generally tubular or cylindrical outer surface, an axis, and one end of the axle may be operably connected to wheel 113. Each U-bolt 101, 102 has two externally threaded ends 103, 104 and an intermediate portion or section 105 that forms an arc around the axle housing 100.

The externally threaded ends of either or both U-bolts 101, 102 may be fastened and tightened to leaf spring 107. In one embodiment, internally threaded fasteners may be used to tighten the ends of the U-bolts 101, 102 to plate 106, which holds leaf spring 107 to the axle housing 100. The leaf spring 107, which has opposing ends pivotally connected to a vehicle frame member (not shown) may be a single leaf spring, dual leaf spring, or multiple leaf spring. The leaf spring 107 is positioned generally perpendicular to the axle housing 100, and may be over the axle housing 100. Spring retaining seat 108 also may be held between the leaf spring 107 and the axle housing 100. The spring retaining seat 108 may have a surface that conforms to the surface of the axle housing 107.

Axle housing 100 is provided with a first pair of tabs 109, 110, and a second pair of tabs 111, 112. The tabs 109, 110, 111, 112 are integral with the axle housing 100 and in one embodiment may be cast into the axle housing 100. The tabs 109, 110, 112, 112 extend from the axle housing 100 in an orientation that is perpendicular to the axis of the axle.

Tabs 109, 110 are configured and spaced to trap the intermediate portion or section of U-bolt 101 and block or prevent lateral movement of the U-bolt 101 with respect to the axle housing 100. Similarly, tabs 111, 112 are configured and spaced to trap the intermediate portion or section of U-bolt 102, and prevent or block lateral movement of the U-bolt 102 with respect to the axle housing 100.

Each pair of tabs 109, 110, 111, 112 may be spaced so that at least a portion of the U-bolt 101, 102, preferably the intermediate portion, may be positioned therebetween during assembly. For example, the spacing between each pair of tabs 109, 110, 111, 112 may be between about 0,635 cm (¼ inch) and 2,54 cm (1 inch), depending on the diameter of the U-bolt 101, 102.

Each tab 109, 110, 111, 112 may protrude or extend from the axle to a height or length sufficient to prevent the intermediate section of the U-bolt 101, 102 from sliding over the tab 109, 110, 111, 112, or otherwise moving laterally with respect to the axle housing 100. The tabs 109, 110, 111, 112 should retain the U-bolt 101, 102 so that the U-bolt 101, 102 remains perpendicular to the axle housing 100 during assembly and in service. Each tab 109, 110, 111, 112 may have any shape that will adequately restrain U-bolt movement along the axis of the axle housing 100. In one embodiment, the sides of each tab 109, 110, 111, 112 may be sloped in a manner to help locate and guide a U-bolt 101, 102 between the tabs 109, 110, 111, 112 during the assembly process.

Thus, in one embodiment of the invention, each pair of tabs 109, 110, 111, 112 provides a guide to locating a U-bolt 101, 102 during assembly of a leaf spring 107 to an axle housing 100. The tabs 109, 110, 111, 112 provide a positive locking feature for the U-bolts 101, 102 during service of the vehicle, to prevent the U-bolts 101, 102 from moving laterally along the axis of the axle tube. As a result, the joint between the leaf spring 107 an d axle housing 100 is more secure.

Having described a preferred embodiment, it will become apparent that various modifications can be made without departing from the scope of the invention as defined in the accompanying claims.

## Claims

1. An apparatus comprising an axle housing (100) having a generally tubular outer surface and an axis, a leaf spring (107) positionable perpendicular to the axis of the axle housing, a pair of U-bolts (101, 102), each U-bolt (101, 102) having an intermediate portion forming an arc around the axle housing, and having first and second ends operably connected to the leaf spring (107), **characterized by** two pairs of tabs (109, 110, 111, 112) integral with and/or extending from the axle housing (100), the intermediate portion of each U-bolt (101, 102) positioned between one pair of the tabs (109, 110, 111, 112) .

2. The apparatus according to claim 1 **characterized by** a spring retaining seat (108) between the axle housing (100) and the leaf spring (107).

3. The apparatus according to claim 1 or 2, **characterized in that** the two pairs of tabs (109, 110, 111, 112) are cast into the axle housing (100).

4. The apparatus according to one or several of the previous claims, **characterized in that** the two pairs of tabs (109, 110, 111, 112) extend in a direction perpendicular from the axle housing (100).

5. The apparatus according to one or several of the previous claims, **characterized in that** the leaf spring (107) is a single leaf spring.

6. The apparatus according to one or several of the previous claims, **characterized in that** the tabs (109, 110, 111, 112) have sloped surfaces.

7. A method comprising casting a pair of tabs (109, 110, 111, 112) into an axle housing (100), the axle housing (100) having an axis, each of the pair of tabs (109, 110, 111, 112) extending perpendicular from the axis, positioning an intermediate portion of a U-bolt (101, 102) between the pair of tabs (109, 110, 111, 112).

8. The method according to claim 7 further comprising positioning a spring retaining seat (108) between the axle housing (100) and the leaf spring (107).

9. The method according to claim 7 or 8 further comprising casting a second pair of tabs (109, 110, 111, 112) into the axle housing (100), each of the second pair of tabs (109, 110, 111, 112) extending perpendicular from the axis.

10. The method of one or several of the claims 7 to 9 wherein the U-bolt (101, 102) has a pair of ends fastened to a plate.

## Patentansprüche

1. Vorrichtung umfassend ein Achsgehäuse (100) mit einer allgemein rohrförmigen Außenfläche und einer Achse, eine Blattfeder (107), die senkrecht zur Achse des Achsgehäuses positioniert werden kann, ein Paar U-Bügel (101, 102), wobei jeder U-Bügel (101, 102) einen Zwischenabschnitt hat, der einen Bogen um das Achsgehäuse bildet, sowie ein erstes und ein zweites Ende, die mit der Blattfeder (107) wirkverbunden sind, **gekennzeichnet durch** zwei Paare Nasen (109, 110, 111, 112), die mit dem Achsgehäuse (100) einstückig sind und/oder sich vom Achsgehäuse (100) erstrecken, wobei der Zwischenabschnitt jedes U-Bügels (101, 102) zwischen einem Paar der Nasen (109, 110, 111, 112) positioniert ist.

2. Vorrichtung nach Anspruch 1, **gekennzeichnet durch** einen Federhaltesitz (108) zwischen dem Achsgehäuse (100) und der Blattfeder (107).

3. Vorrichtung nach Anspruch 1 oder 2, **dadurch gekennzeichnet, dass** die beiden Paare Nasen (109, 110, 111, 112) in das Achsgehäuse (100) gegossen sind.

4. Vorrichtung nach einem oder mehreren der vorhergehenden Ansprüche, **dadurch gekennzeichnet, dass** sich die beiden Paare Nasen (109, 110, 111, 112) in einer Richtung senkrecht vom Achsgehäuse (100) erstrecken.

5. Vorrichtung nach einem oder mehreren der vorhergehenden Ansprüche, **dadurch gekennzeichnet, dass** die Blattfeder (107) eine Einzelblattfeder ist.

6. Vorrichtung nach einem oder mehreren der vorhergehenden Ansprüche, **dadurch gekennzeichnet, dass** die Nasen (109, 110, 111, 112) geneigte Oberflächen haben.

7. Verfahren umfassend das Gießen eines Paars Nasen (109, 110, 111, 112) in ein Achsgehäuse (100), wobei das Achsgehäuse (100) eine Achse hat, wobei jede des Paars Nasen (109, 110, 111, 112), das sich senkrecht von der Achse erstreckt, einen Zwischenabschnitt eines U-Bügels (101, 102) zwischen das Paar Nasen (109, 110, 111, 112) positioniert.

8. Verfahren nach Anspruch 7, ferner umfassend das Positionieren eines Federhaltesitzes (108) zwischen dem Achsgehäuse (100) und der Blattfeder (107).

9. Verfahren nach Anspruch 7 oder 8, ferner umfassend das Gießen eines zweiten Paars Nasen (109, 110, 111, 112) in das Achsgehäuse (100), wobei sich jede des zweiten Paars Nasen (109, 110, 111, 112) senkrecht von der Achse erstreckt.

10. Verfahren nach einem oder mehreren der Ansprüche 7 bis 9, wobei der U-Bügel (101, 102) ein Paar an einer Platte befestigte Enden hat.

## Revendications

1. Appareil comprenant un carter d'essieu (100) ayant une surface externe généralement tubulaire et un axe, un ressort à lames (107) pouvant être positionné perpendiculairement à l'axe du carter d'essieu, une paire de boulons en forme de U (101, 102), chaque boulon en forme de U (101, 102) ayant une partie intermédiaire formant un arc autour du carter d'essieu, et ayant des première et seconde extrémités raccordées de manière opérationnelle au ressort à lames (107), **caractérisé par** deux paires de languettes (109, 110, 111, 112) solidaires avec et/ou s'étendant à partir du carter d'essieu (100), la partie intermédiaire de chaque boulon en forme de U (101, 102) étant positionnée entre une paire de languettes (109, 110, 111, 112).

2. Appareil selon la revendication 1, **caractérisé par** un siège de retenue de ressort (108) entre le carter d'essieu (100) et le ressort à lames (107).

3. Appareil selon la revendication 1 ou 2, **caractérisé en ce que** les deux paires de languettes (109, 110, 111, 112) sont moulées dans le carter d'essieu (100).

4. Appareil selon une ou plusieurs des revendications précédentes, **caractérisé en ce que** les deux paires de languettes (109, 110, 111, 112) s'étendent dans une direction perpendiculaire à partir du carter d'essieu (100).

5. Appareil selon une ou plusieurs des revendications précédentes, **caractérisé en ce que** le ressort à lames (107) est un ressort à lame unique.

6. Appareil selon une ou plusieurs des revendications précédentes, **caractérisé en ce que** les languettes (109, 110, 111, 112) ont des surfaces inclinées.

7. Procédé comprenant les étapes consistant à mouler une paire de languettes (109, 110, 111, 112) dans un carter d'essieu (100), le carter d'essieu (100) ayant un axe, chaque languette de la paire de languettes (109, 110, 111, 112) s'étendant perpendiculairement à partir de l'axe, positionner une partie intermédiaire d'un boulon en forme de U (101, 102) entre la paire de languettes (109, 110, 111, 112).

8. Procédé selon la revendication 7, comprenant en outre l'étape consistant à positionner un siège de retenue de ressort (108) entre le carter d'essieu (100) et le ressort à lames (107).

9. Procédé selon la revendication 7 ou 8, comprenant en outre l'étape consistant à mouler une seconde paire de languettes (109, 110, 111, 112) dans le carter d'essieu (100), chaque languette de la seconde paire de languettes (109, 110, 111, 112) s'étendant perpendiculairement à l'axe.

10. Procédé selon une ou plusieurs des revendications 7 à 9, dans lequel le boulon en forme de U (101, 102) a une paire d'extrémités fixée à une plaque.
